# EUROPEAN PATENT APPLICATION

(11) **EP 3 157 093 A1**
(43) Date of publication of application: **19.04.2017**
(21) Application number: 15806458.4
(22) Date of filing: 28.05.2015
(51) Int. Cl.: H01M 10/6566, H01M 10/613, H01M 10/617, H01M 10/627, H01M 10/6563

(54) **BATTERY PANEL**

(30) Priority: 10.06.2014 JP 2014119259
(71) Applicant: Hitachi Chemical Co., Ltd., Chiyoda-ku Tokyo 100-6606 (JP)
(72) Inventor: HISANO, Nae, Tokyo 100-8280 (JP); KANOH, Mitsuyoshi, Tokyo 100-6606 (JP); URANO, Shinichi, Narashino-shi, Chiba 275-0001 (JP)
(74) Representative: Hoffmann Eitle
(86) International application number: PCT/JP2015/065371
(87) International publication number: WO 2015/190302

(57) **Abstract**

A battery board 10 includes a housing 11 in which a plurality of stages of shelves 22 are disposed to be spaced from each other in a vertical direction, and a battery pack 30 is placed on each shelf 22. The battery pack 30 includes a battery case 31 containing a plurality of battery cells 32, and an inlet 42 is provided at a front portion of the battery case 31. A common exhaust passage 25 communicating with an exhaust port 18 is provided between a back surface portion of the battery pack 30 and a back wall 13. A plurality of stages of intake ports 20 are provided in a front door 12 to be opposed to the front portion of the battery case 31. An effective opening area of the intake port of a lowermost stage is formed to be the largest, and the effective opening area of the intake port of each stage is gradually decreased from the intake port of the lowermost stage to an uppermost stage. Those intake ports are formed in the front door 12.

## Description

### TECHNICAL FIELD

The present invention relates to a battery board configured to reduce a rise in temperature and temperature variation of a plurality of lithium-ion batteries mounted in a housing.

### BACKGROUND ART

In recent years, attention has been focused on renewable energy such as wind power generation and photovoltaic power generation. In order to use such renewable energy, an electric power storage system having a large capacity is essential. The electric power storage system prevents output fluctuations caused by natural conditions. In the electric power storage system, lithium-ion battery cells are used. Each battery cell has a high-energy density and excellent charging/discharging efficiency and an excellent cycle life. Attention has been focused on a storage battery facility (a battery board for a cubicle specification) including a plurality of battery packs. Each battery pack includes a plurality of battery cells connected in series or parallel and a battery case containing the battery cells.

In regard to the battery board used for such purposes, for example, several tens to a hundred and several tens of lithium battery cells are mounted inside a housing, and the battery board is required to uniformly retain performances of those batteries for a long period of time more than ten years. Accordingly, it is required to cool temperatures of the batteries inside the battery pack without variation and to cool the temperature between each of the battery packs without variation.

An example of the battery board configured to cool the plurality of battery packs disposed in the housing is, as disclosed in Patent Document 1, a battery board including a housing partitioned into a battery pack chamber and an exhaust chamber by a partition plate as a boundary. In the battery pack chamber, multiple stages of battery pack cases into which battery cells are incorporated are piled at a predetermined interval, a case intake port is provided in a front surface of each battery pack case, and a case exhaust port is provided in a back surface thereof. An intake port is provided in a front surface of the housing as being opposed to the case intake port of each battery pack case, and an opening is provided in the partition plate as being opposed to the case exhaust port of each battery pack case. In a ceiling portion of the exhaust chamber, a ceiling exhaust port is provided so as to exhaust air inside the housing to an outside thereof

### RELATED ART DOCUMENT

### PATENT DOCUMENT

Patent Document 1: Japanese Patent Application Laid-Open Publication No. 2013-196908

### SUMMARY OF THE INVENTION

### PROBLEMS TO BE SOLVED BY THE INVENTION

In the above-mentioned battery board, in a case in which the number of battery packs to be contained increases, a temperature inside a housing rises. Therefore, a ceiling cooling fan is necessarily provided to a ceiling exhaust port as described in FIG 3 of Patent Document 1. In a case of such an aspect, it is possible to equalize a temperature of air which is to blow against each battery pack. However, an amount of air flowing into the housing differs depending on a distance between the ceiling cooling fan and each battery pack. Accordingly, a cooling effect differs for each battery pack. Consequently, it becomes difficult to cool the battery packs without temperature variation among the battery packs.

An object of the present invention is to provide a battery board which capable of lowering maximum temperatures of battery cells constituting each battery pack and also cooling the battery packs without temperature variation among the battery packs.

### MEANS FOR SOLVING THE PROBLEMS

A battery board as an example of the present invention includes: a housing including a ceiling wall provided with an exhaust port on a back surface side of the housing, right and left side walls, a back wall, and a front door; a plurality of stages of shelves disposed to be spaced from each other in a vertical direction in the housing and forming a gap between the back wall; a battery pack placed on each of the shelves and including a plurality of battery cells and a battery case containing the battery cells and provided with an inlet at a front portion of the battery case, the inlet allowing air cooling the battery cells to flow; a common exhaust passage formed continuously in the vertical direction between a back surface portion of the battery pack and the back wall and communicating with the exhaust port; an exhaust passage formed between an upper surface of the battery pack and the shelf right above the battery pack and communicating with the common exhaust passage; a plurality of stages of intake ports vertically provided in the front door to be opposed to the front portion of the battery case and taking outside air into the housing; and an exhaust fan provided in the housing and exhausting the air inside the housing from the exhaust port to an outside, and an effective opening area of the intake port of a lowermost stage is formed to be a largest, and the effective opening area of the intake port of each stage is gradually decreased from the intake port of the lowermost stage of an uppermost stage.

### EFFECTS OFTHE INVENTION

According to the present invention, a flow rate of cooling air to be supplied to each battery pack inside a housing and a temperature between batteries are substantially equalized in regard to each battery pack disposed in a vertical direction, and accordingly, it is possible to substantially equalize a cooling effect among the battery packs. Consequently, it is possible to lower maximum temperatures of battery cells constituting each battery pack and also to cool the battery packs without temperature variation among the battery packs. As a result, a battery board with high reliability can be provided.

### BRIEF DESCRIPTIONS OF THE DRAWINGS

FIG 1 is a perspective view illustrating an exterior of a battery board of an embodiment;
FIG 2 is a longitudinal cross-sectional view of the battery board illustrated in FIG 1;
FIG 3 is a front view illustrating an inside of the battery board in which battery packs are mounted;
FIG 4 is a partially cutaway perspective view illustrating one battery pack mounted inside the battery board;
FIG 5 is a cross-sectional view illustrating a flow of cooling air inside the battery pack illustrated in FIG 4;
FIG 6 is a partially cutaway perspective view illustrating a modification example of the battery pack;
FIG 7 is a cross-sectional view illustrating a flow of cooling air inside the battery pack illustrated FIG 6;
FIG 8 is a characteristic diagram illustrating an input condition of a thermo-fluid analysis in regard to the battery board of the embodiment illustrated in FIGs.1 to 5;
FIG 9 is a characteristic diagram illustrating a result of a flow ratio of intake air taken into each battery pack in each stage obtained from the thermo-fluid analysis;
FIG 10 is a characteristic diagram illustrating a result of a maximum temperature rising ratio of each battery pack in each stage obtained from the thermo-fluid analysis;
FIG 11 is a characteristic diagram illustrating a result of a ratio of temperature variation of each battery pack in each stage obtained from the thermo-fluid analysis;
FIG 12 is a longitudinal cross-sectional view of a battery board according to another embodiment;
FIG 13 is a front view illustrating a front door of FIG 12;
FIG 14 is a front view illustrating a modification example of the front door;
FIG 15 is a front view illustrating another modification example of the front door; and
FIG 16 is a longitudinal cross-sectional view of a battery board according to still another embodiment.

### DETAILED DESCRIPTION OF PREFERRED EMBODIMENTS

Hereinafter, an embodiment of the present invention will be described in detail with reference to the accompanying drawings.

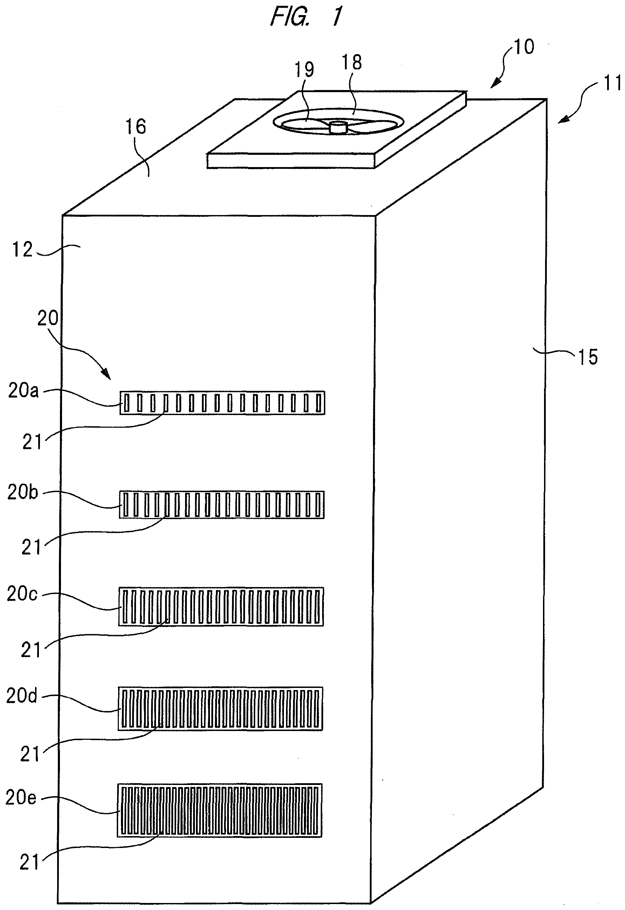

As illustrated in FIGs. 1 to 3, a battery board 10 includes a cuboid housing 11 for a steel cubicle specification. The housing 11 includes a front door 12 on a front side, a back wall 13 on a back surface side opposed to the front door 12, and side walls 14 and 15 on both sides opposed to each other. A ceiling wall 16 is provided on a ceiling side of the housing 11, and a bottom wall 17 opposed to the ceiling wall 16 is provided on a bottom surface side of the housing 11. The front door 12 is a single-door type panel openably/closably attached by a hinge to one of the side walls 14 and 15 on the both sides. Alternatively, the front door 12 may be a hook type panel detachably attached to the housing 11 by a hook. The front door 12 may also be of a double-door type including two panels openably/closably attached by hinges to the side walls 14 and 15, respectively. The ceiling wall 16 is provided with an exhaust port 18 in the back surface, and an exhaust fan 19 is provided in the housing 11 in order to exhaust air inside the housing 11 from the exhaust port 18.

The front door 12 is provided with a plurality of stages of rectangular intake ports 20 spaced from each other in a vertical direction. Each intake port 20 has a width in a horizontal direction substantially equivalent to each other. As illustrated in FIG 1, five stages of the intake ports 20 are provided, and each intake port 20 is denoted by reference characters 20a to 20e from the top in order. In the front door 12 illustrated in FIGs. 1 to 3, five stages of the intake ports 20a to 20e are provided to be spaced from each other in the vertical direction, but the number of stages of the intake ports 20 provided in the front door 12 should not be limited to five. In the front door 12 illustrated in FIG 1, each of the intake ports 20a to 20e of each stage is formed by a plurality of holes or slits 21 extending in the vertical direction, and each slit 21 has a width equivalent to each other. An interval or a pitch between the slits 21 in the horizontal direction is also equivalent to each other. The slits 21 are formed by punching a plate material constituting the front door 12.

In regard to a length or height in the vertical direction of each slit 21, it is different depending on the stage. Specifically, a height of each of the plurality of slits 21 forming the intake port 20e of the lowermost stage is the highest, and the height of each of the plurality of slits 21 forming each intake port 20 is getting shorter gradually from a lower stage to an upper stage. A height of each of the plurality of slits 21 forming the intake port 20a of the uppermost stage in the vertical direction is the shortest. An effective opening area is set in order to introduce outside air into the housing 11 by the slits 21 constituting each of the intake ports 20a to 20e. The effective opening area is adjusted to satisfy the relation A₁ > A₂ > A₃ > ... Aₙ₋₁ > An, assuming that A is the effective opening area of each intake port of a first stage to an n-th stage, where the first stage is the lowermost stage and the n-th stage is the uppermost stage.

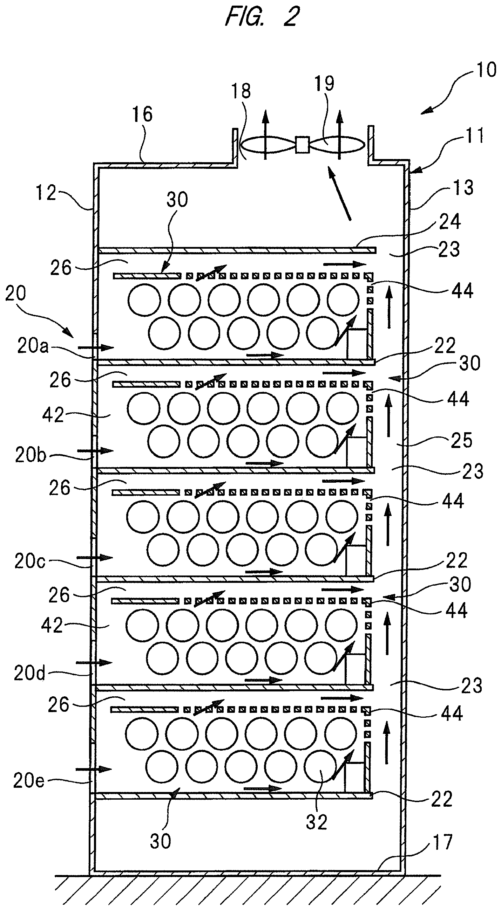

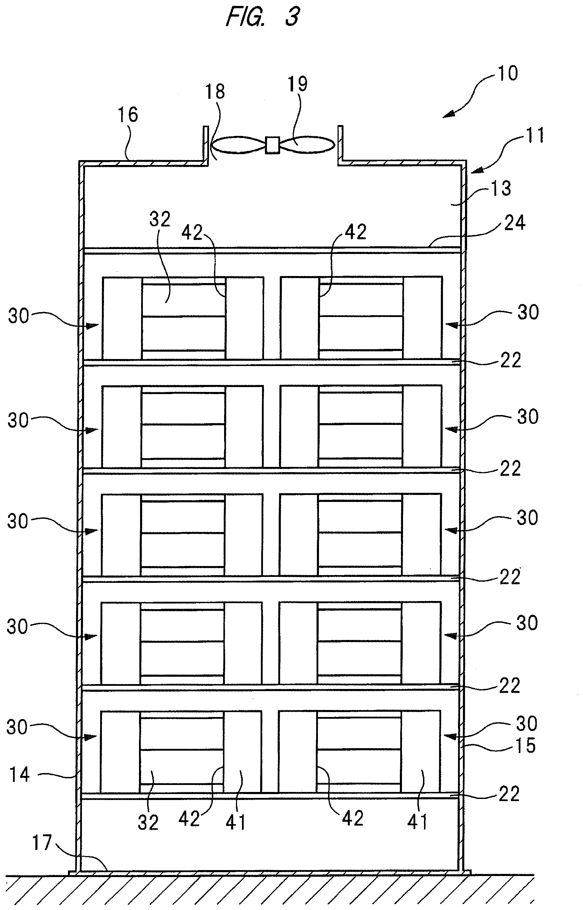

FIG 3 illustrates an inside of the housing 11 in a state in which the front door 12 is removed. Inside the housing 11, a plurality of stages of shelves 22 are disposed to be spaced from each other in the vertical direction. The housing 11 illustrated in FIG 3 is provided with five stages of the shelves 22 in accordance with the intake ports 20. Each shelf 22 has a substantially rectangular shape and has both ends fixed to insides of the side walls 14 and 15, respectively. A gap 23 is formed between a side portion on a back surface side of each shelf 22 and the back wall 13 of the housing 11 as illustrated in FIG 2. In this manner, five stages of the shelves 22 corresponding to five stages of the intake ports 20a to 20e are disposed inside the housing 11. Above a shelf 22 of the uppermost stage, a shielding plate 24 including a shelf having a shape equivalent to that of each shelf 22 is fixed to the side walls 14 and 15. The gap 23 is formed between the shielding plate 24 and back wall 13. As illustrated in FIG 3, two battery packs 30 are disposed on each shelf 22. As illustrated in FIG 2, each shelf 22 is disposed at the same height as a lower side portion of the intake port 20 of each stage of the above-mentioned front door 12.

Lengths of each shelf 22 and the shielding plate 24 in a depth direction, that is, lengths in a front-back direction are formed to be shorter than lengths in the front-back direction of the side walls 14 and 15 of the housing 11, so that the gap 23 is formed between the back wall 13 and each shelf 22 as well as the shielding plate 24. A back surface of each battery pack 30 placed on each shelf 22 is shifted toward the front side rather than the back wall 13. Accordingly, the above-mentioned gap 23 in the housing 11 is continuous in vertical direction by the insides of the side walls 14 and 15, an inner surface of the back wall 13, and the back surface of each battery pack 30. Therefore, a common exhaust passage 25 is formed between the back surface of each battery pack 30 and back wall 13 as illustrated in FIG 2. Exhaust air from each battery pack 30 of each stage passing through the common exhaust passage 25 is sucked by the exhaust fan 19 disposed in the housing 11 and is exhausted from the exhaust port 18 to an outside of the housing 11.

A gap is formed between the shielding plate 24 and an upper surface of each battery pack 30 placed on the shelf 22 of the uppermost stage, and between an upper surface of each battery pack 30 placed on each shelf 22 and the shelf 22 right above aforementioned each battery pack, respectively. Each gap constitutes an exhaust passage 26 which introduces, to the common exhaust passage 25, cooling air flowing from each battery pack 30 disposed under each gap.

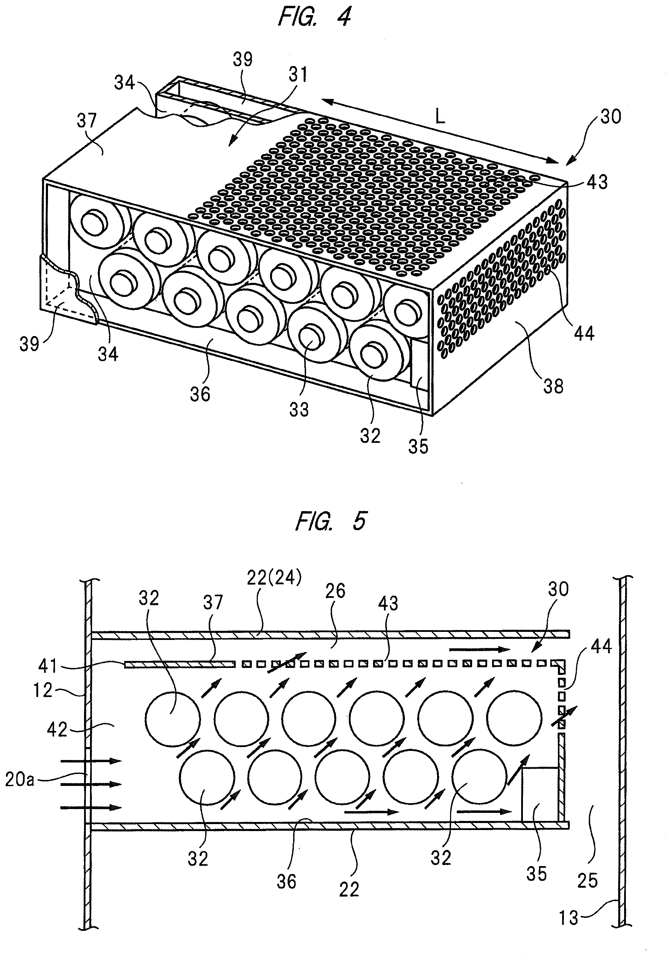

Next, a configuration of one battery pack 30 illustrated in FIG 4 will be described. The battery pack 30 includes a substantially cuboid battery case 31, and a plurality of cylindrical battery cells 32 contained in the battery case 31. In the battery pack 30 illustrated in FIG 4, eleven battery cells 32 are contained inside the battery case 31, extending in a width direction of the battery case 31. Note that the number of the battery cells 32 provided in one battery pack 30 may be set to be an arbitrary number. As illustrated in FIG 4, one of electrode terminals 33 is provided at one end or a head of each battery cell 32 in an axial direction. The other of the electrode terminals (not illustrated) is provided at the other end or a bottom of each battery cell 32. Plate-like cell holders 34 are provided inside the battery case 31 to be located at the both ends of the battery cells 32, respectively, extending in a longitudinal direction. The both ends of each battery cell 32 are sandwiched by the cell holders 34 and held by the battery case 31. A control box 35 is provided in the battery case 31. In the control box 35, a control substrate serving as a control unit for monitoring temperature and voltage of each battery cell 32 is incorporated. As illustrated in FIG 5, the battery pack 30 includes an upper battery cell group in which six battery cells 32 are formed in parallel to each other, and a lower battery cell group in which five battery cells 32 are formed in parallel to each other. The lower battery cells 32 and the upper battery cells 32 are shifted in the longitudinal direction of the battery case 31, and when seen from a side surface of the battery pack 30, the battery cells 32 are disposed in the battery case 31 in a staggered manner.

The battery case 31 includes a bottom plate 36, a top plate 37 which is in parallel to the bottom plate 36, and a back plate 38. Side plates 39 are fixed to the both side surfaces of the battery case 31. Note that the side plate 39 provided to the front of the battery case 31 is illustrated as a cutaway state in FIG 4. In this manner, the battery case 31 includes five plate materials, and each plate material is formed by, for example, a resin member having a high insulating property. As illustrated in FIG 3, an inlet 42 into which the air flowing in from the intake ports to the housing 11 flows is provided at a front portion 41 of each battery case 31. The inlet 42 communicates with an internal space between the two cell holders 34. As illustrated in FIG 4, the top plate 37 of the battery case 31 is provided with a plurality of upper-surface outlets 43 through which the cooling air flows to an outside of the battery case 31. The upper-surface outlets are formed, for example, through a punching process. Similarly, the back plate 38 of the battery case 31 is provided with a plurality of back-surface outlets 44 for the cooling air.

Herein, in a region of the upper surface of the battery case 31 where the plurality of upper-surface outlets 43 are provided, a length from the back surface of the battery case 31 is defined as an effective length L of an upper-surface exhaust port. In order to change the effective length L of the upper-surface exhaust port for each stage where each battery case 31 is disposed, a separate cover may be provided on the battery case 31 in place of the top plate 37.

Next, with reference to FIG 5 and FIG 2, a flow of the cooling air inside each battery pack 30 will be described. FIG 5 illustrates one battery pack 30 placed on the shelf 22 of the uppermost stage of the housing 11. The battery pack 30 is disposed in such a way that the front portion 41 thereof is opposed to the intake port 20a provided in the front door 12 of the housing 11. As mentioned above, the common exhaust passage 25 is formed at the back of the battery pack 30, and the cooling air passing through the battery case 31 flows from the back-surface outlets 44 to the common exhaust passage 25. The exhaust passage 26 is formed above the battery pack 30, and the cooling air passing through the battery case 31 flows from the upper-surface outlets 43 to the common exhaust passage 25 through the exhaust passage 26. The battery cells 32 extend in the width direction of the battery case 31, and the air flowing in from the intake port flows in a direction in which the air flows across each battery cell 32.

The cooling air flowing in from the outside of the housing 11 to the inside of the housing 11 through the intake port 20a flows into the battery pack 30 from the inlet 42 of the front portion 41 disposed to be opposed to the intake port 20a. A lower side portion of the front portion 41 is aligned with a lower end of the intake port 20a, and in FIG 5, an airflow flowing in from a lower portion of the intake port 20a goes straight in a passage between an inner surface of the bottom plate 36 and the battery cells 32 of the lower stage of the battery case 31 of the battery pack 30. The airflow hits against the control box 35 disposed at a back surface portion, and then, the airflow goes upward. Consequently, the battery cell 32 in the deepest portion of the lower stage is cooled by the airflow with a little temperature rise. The airflow after the cooling is exhausted from the back-surface outlets 44 of the battery case 31 to the common exhaust passage 25.

An airflow flowing in from an upper portion of the intake port 20a hits against the battery cells 32 of the upper stage and lower stage disposed on the frontmost side of the battery pack 30, and then, the airflow separates in an obliquely upward direction to be exhausted from the upper-surface outlets 43 of the battery case 31 to the exhaust passage 26. Consequently, it is possible to prevent the airflow with a great temperature rise from reaching the battery cells 32 in the deep portion.

In regard to an airflow which hits against the battery cells 32 disposed in a middle portion of the battery pack 30 and decelerates its speed, most of such airflow is exhausted to the exhaust passage 26 from the upper-surface outlets 43 of the battery case 31 having the large opening area. Note that the control box 35 is preferably disposed so as not to impede the airflow necessary for the cooling. For example, the control box 35 may also be disposed outside the battery pack 30.

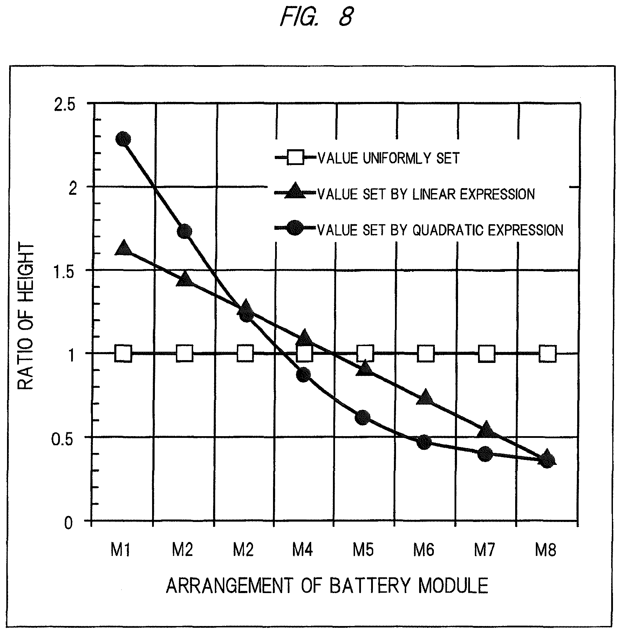

Next, as described above, a result obtained from a thermo-fluid analysis of the battery board 10 in a case where the effective opening area of the intake port of each stage is gradually decreased from the intake port of the lowermost stage to the uppermost stage will be described with reference to FIGs. 8 to 11. In this thermo-fluid analysis, a basic structure of the battery board 10 is the same as that illustrated in FIGs. 1 to 5, and a result relating to the battery board 10 in which eight stages of shelves 22 are provided inside a housing 11 and the battery pack 30 of the embodiment illustrated in FIG 4 is placed in each shelf 22 is indicated. Eight stages of intake ports 20 are provided in a front door 12 in accordance with the shelves 22.

In FIG 8, a horizontal axis indicates a position in a vertical direction of each battery pack 30 disposed inside the housing 11. M1 in the horizontal axis indicates the battery pack 30 of the lowermost stage, and M8 indicates the battery pack 30 of the uppermost stage. A vertical axis indicates a ratio of a length or a ratio of a height of each slit 21 constituting the intake port 20 of each stage. In FIG 8, a symbol □ indicates a case in which a length of each slit 21 in the vertical direction by which the effective opening area of the intake port 20 of each stage is set is equal to each other, that is, a case of uniformly setting an equal length. The ratio of the length of each slit 21 in such a case is set to be 1. A symbol ▲ indicates a case in which the length of each slit 21 is gradually decreased from a slit length of the intake port of the lowermost stage to a slit length of the intake port of the uppermost stage based on a constant ratio, that is, based on a condition of a linear expression. Meanwhile, a symbol ● indicates a case of considerably changing the length of each slit 21 in the intake ports of the lower stages and slightly changing the length of each slit 21 in the intake ports of the upper stages so as to gradually decrease a decrease ratio in each length from the slit length of the intake port of the lowermost stage to the slit length of the intake port of the uppermost stage based on a condition of a quadratic expression. In this manner, FIG 8 indicates an input condition of the thermo-fluid analysis on the effective opening area of three patterns of each intake port 20 formed in the front door 12. In each pattern, the whole opening area of the intake ports 20 formed in the front door 12 is equalized under any conditions.

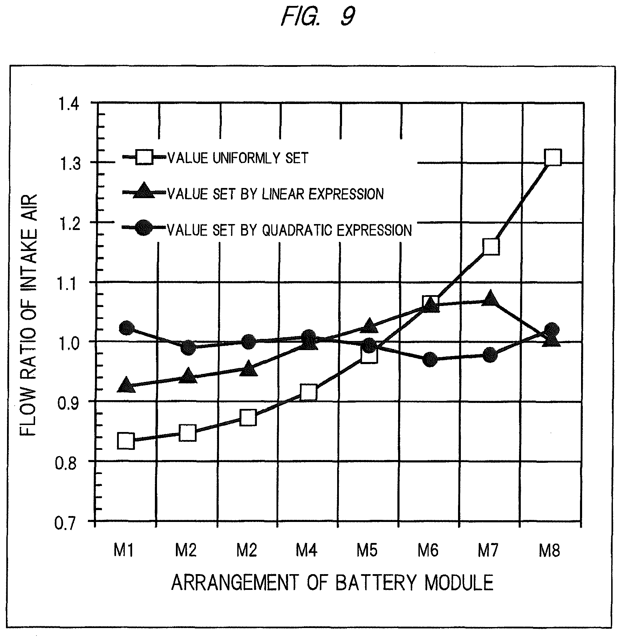

FIG 9 illustrates a result of a flow ratio of intake air of the battery pack 30 of each stage obtained from the thermo-fluid analysis based on the input condition in FIG 8. In FIG 9, a horizontal axis indicates the position of each battery pack 30 disposed inside the housing 11 in the vertical direction similarly to FIG 8, and a vertical axis indicates the flow ratio of the intake air taken into the battery pack 30. Herein, as the flow ratio of the battery pack of each stage is closer to 1.0, it represents that the cooling air is equally distributed.

In a case of applying the condition of setting the equal length indicated by the symbol □, the flow ratio of the intake air at M1 of the lowermost stage is the smallest. The higher the stage, the more the flow ratio rises. The flow ratio of the intake air at M8 of the uppermost stage is the largest. As illustrated in FIG 9, in a case of applying the condition of the quadratic expression indicated by the symbol ●, the flow ratio of the intake air of each stage is much closer to 1.0 and is more uniform than in a case of applying the condition of the linear expression indicated by the symbol ▲.

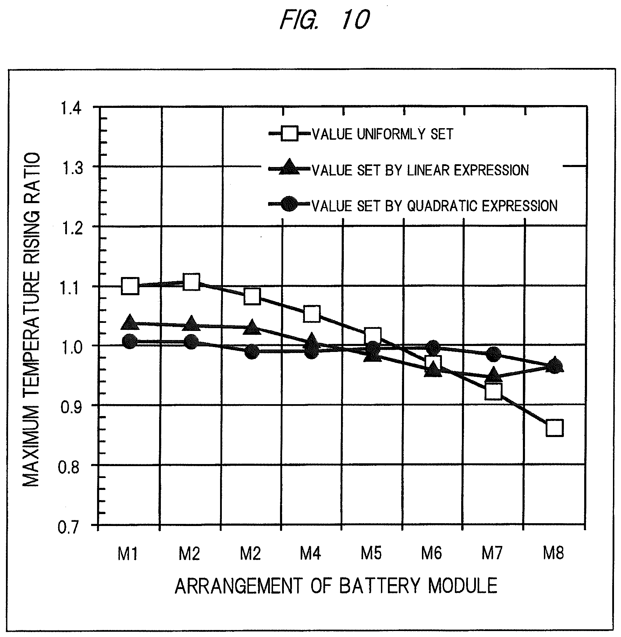

FIG 10 illustrates a result of a maximum temperature rising ratio of the battery pack 30 of each stage obtained from the thermo-fluid analysis based on the input condition in FIG 8. In FIG 10, a horizontal axis indicates the position of each battery pack 30 disposed inside the housing 11 in the vertical direction, and a vertical axis indicates the maximum temperature rising ratio of the battery pack. Herein, the maximum temperature rising ratio represents a ratio of a maximum temperature rising value obtained by subtracting an environmental temperature from the maximum temperature in each battery pack 30. Specifically, the maximum temperature rising value of each battery pack 30 is obtained in the above-mentioned three patterns so as to calculate a mean value of 24 points illustrated in FIG 10. By dividing the maximum temperature rising value at each of the 24 points with the mean value, each maximum temperature rising ratio is calculated.

In FIG 10, it is preferable that an absolute value is small and a difference among arrangements of the battery packs 30 is small. In a case of applying the uniformly setting condition indicated by the symbol □, the maximum temperature rising ratio at M2 is the largest. The higher the stage, the more the ratio lowers. The temperature rising ratio at M8 of the uppermost stage is the minimum. The reason is that, as the stage gets closer to the uppermost stage, the flow ratio of the intake air becomes larger, as illustrated in FIG 9. In addition, comparing to the case of applying the condition of the linear expression indicated by the symbol ▲, the maximum temperature rising ratio in the case of applying the condition of the quadratic expression indicated by the symbol ● is smaller. Note that the difference between these two cases is smaller than the cases regarding the flow ratio in the case in FIG 9.

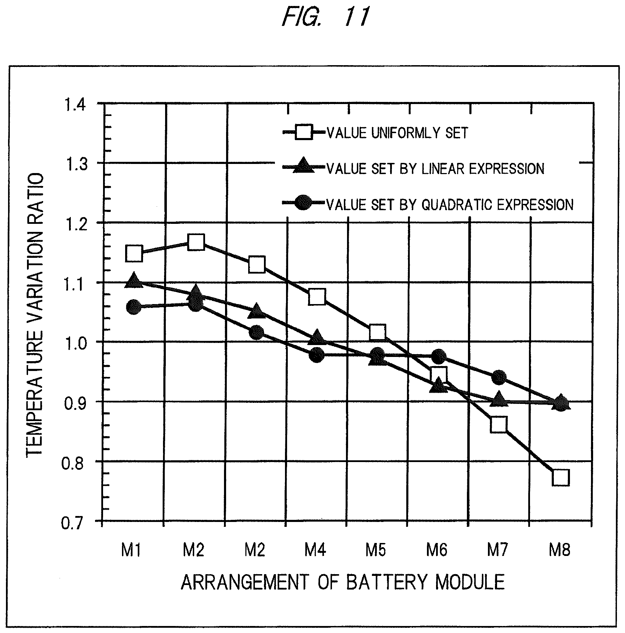

FIG 11 illustrates a result of a temperature variation ratio of the battery pack 30 of each stage obtained by the thermo-fluid analysis based on the input condition in FIG 8. In FIG 11, a horizontal axis indicates the position of each battery pack 30 disposed in the housing 11 in the vertical direction, and a vertical axis indicates the temperature variation ratio of the battery pack. Herein, the temperature variation ratio is obtained by subtracting the minimum temperature from the maximum temperature in each battery pack 30. Specifically, the temperature variation is obtained from the maximum temperature and the minimum temperature in each battery pack 30 in the above-mentioned three patterns so as to calculate a mean value of the temperature variation of 24 points illustrated in FIG 11. By dividing the temperature variation at each of the 24 points with the mean value, each temperature variation ratio is calculated.

In FIG 11, it is preferable that an absolute value is small and a difference among the arrangements of the battery packs 30 is small. In a case of applying the uniformly setting condition illustrated by the symbol □, the temperature variation ratio at M2 is the largest. The higher the stage, the more the ratio lowers. The temperature variation ratio at M8 of the uppermost stage is the minimum. Comparing to the case of applying the condition of the linear expression indicated by the symbol ▲, the temperature variation ratio in the case of applying the condition of the quadratic expression indicated by the symbol ● is smaller. The difference between these two cases is smaller than the cases regarding the flow ratio of the intake air in FIG 9.

As described above, it is confirmed that the maximum temperature rising ratio and the temperature variation ratio of the battery pack 30 of each stage can be reduced by applying the conditions of the linear expression and the quadratic expression and gradually decreasing the effective opening area which is determined by the height of the intake port 20 of each stage in the housing 11 from the effective opening area of the intake port of the lowermost stage to the effective opening area of the intake port of the uppermost stage, rather than by applying the uniformly setting condition.

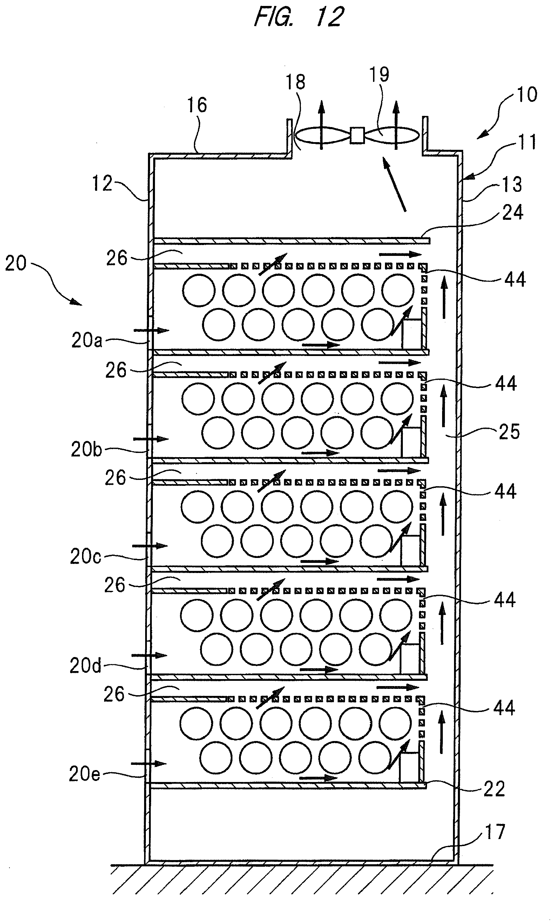

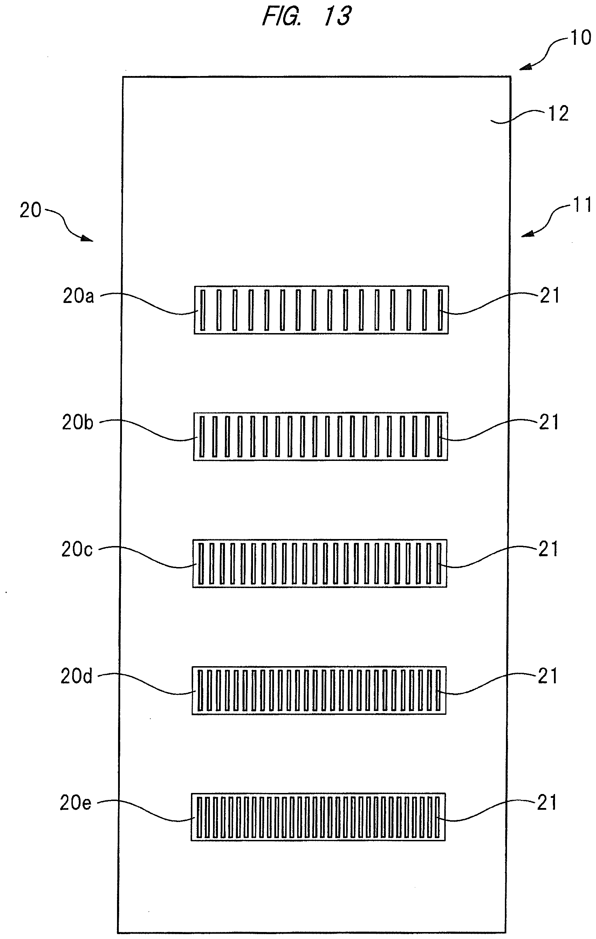

FIG 12 is a longitudinal cross-sectional view of a side surface of a battery board according to another embodiment, and FIG 13 is a front view illustrating a front door of FIG 12.

In a battery board 10 illustrated in FIGs. 12 and 13, an internal structure of a housing 11 is substantially equivalent to that illustrated in FIGs. 1 to 3, while a shape of each intake port 20 provided in the front door 12 of the housing 11 is different from the battery board 10 illustrated in FIGs.1 to 3. As illustrated in FIG 13, a height and a width of each slit 21 constituting the intake port 20 of each stage in a vertical direction is equivalent, while intervals or pitches between the slits 21 in the intake ports 20a to 20e are different among the intake ports 20a to 20e. In this manner, the pitches between the slits 21 are made different for each stage so as to make density of the slits 21 for each stage different among each other, and accordingly, an opening area of the intake port 20 of each stage differs among each other.

Specifically, the pitch between the slits 21 in the intake port 20e of the lowermost stage is made small, so that the opening density of the intake port 20e becomes the largest. The higher the stage, the larger the pitch between the slits 21 is made, and accordingly, the opening density becomes sequentially smaller. The pitch of the intake port 20a of the uppermost stage is formed to be the largest, so that the opening density of the intake port 20a becomes the smallest. In other words, the opening density is formed to satisfy the relation R₁ > R₂ > R₃ > ... Rₙ₋₁ > Rₙ, where R₁ is the opening density of the lowermost stage and Rₙ is the opening density of the uppermost stage. The effective opening area A can be adjusted to satisfy the relation A₁ > A₂ > A₃ > ... Aₙ₋₁ > Aₙ by only changing the pitch or opening density without changing the height of each slit 21 forming each intake port 20. Note that, as R₁ which is the maximum opening density, an opening density regulated by a law and the like is adopted.

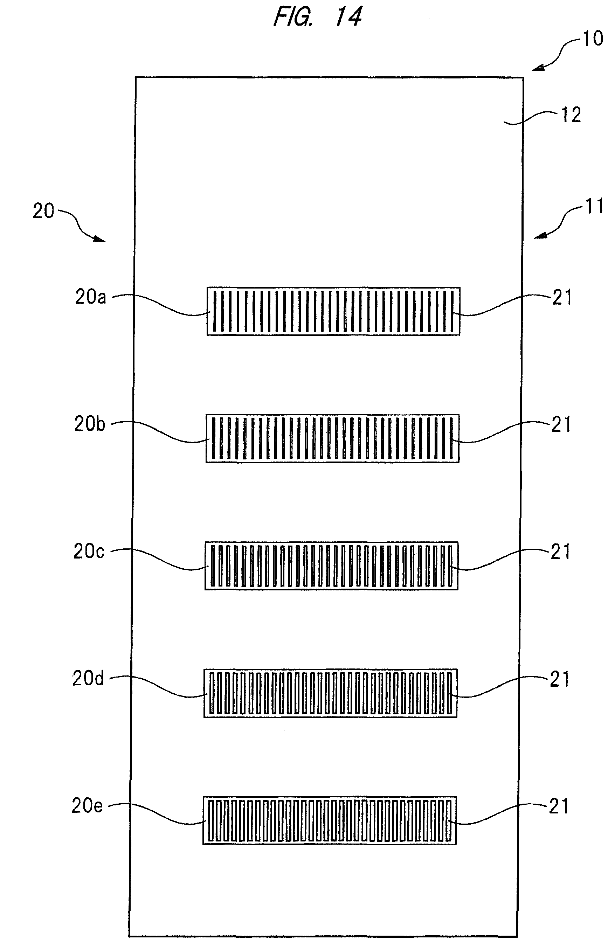

FIG 14 is a front view illustrating a modification example of the front door. As illustrated in FIG. 14, an intake port 20 of each stage has a pitch or opening density equivalent to each other and is formed by a plurality of longitudinally rectangular slits 21 each having a height equivalent to each other. A width of the each slit 21 is different among the stages 20a to 20e.

Specifically, an opening width of each slit 21 constituting the intake port 20e of the lowermost stage is formed to be the largest. As the stage becomes higher, the opening width of each slit 21 constituting each intake port 20 is formed to be smaller in the order. The opening width of each slit 21 constituting the intake port 20a of the uppermost stage is formed to be the smallest. Accordingly, the opening density can be adjusted to satisfy the relation R₁ > R₂ > R₃ > ... Rₙ₋₁ > Rₙ, and the effective opening area A can be adjusted to satisfy the relation A₁ > A₂ > A₃ > ... Aₙ₋₁ > Aₙ.

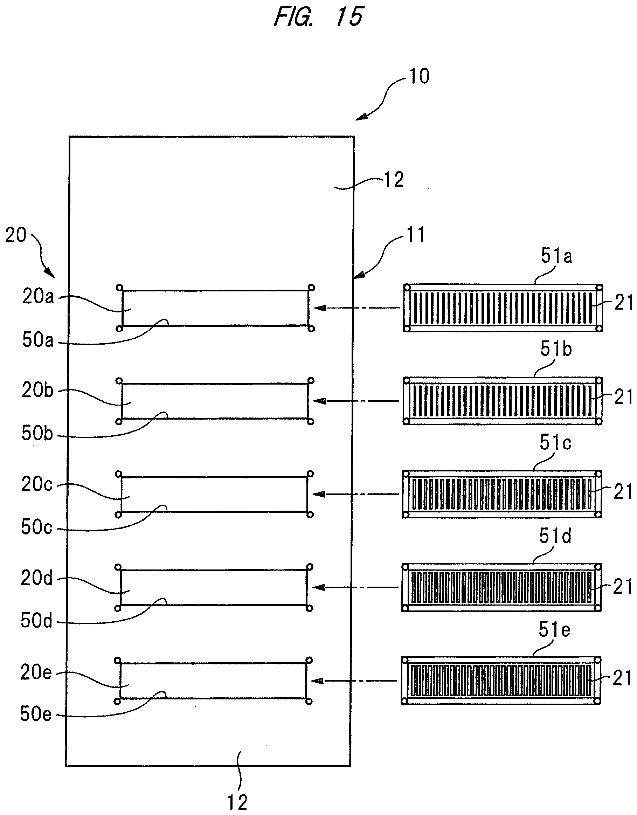

FIG 15 is a front view illustrating another modification example of the front door. As illustrated in FIG 15, rectangular openings 50a to 50e extending in the horizontal direction are formed in a front door 12 so as to correspond to battery packs 30 of each stage. Each of the openings 50a to 50e of each stage has a size equivalent to each other and is a full opening. The openings 50a to 50e are attached with intake plates 51 a to 51 e, respectively, so as to form intake ports 20a to 20e. FIG 15 illustrates a state where the intake plates 51 a to 51e are detached from the front door 12. Similarly to FIG 14, each of the intake plates 51a to 51e forming the intake port 20 of each stage is configured to include a plurality of slits 21 each having a height and a pitch or density equivalent to each other. However, a width of each slit 21 is different among the intake plates 51a to 51e. Accordingly, an effective opening area A is adjusted to satisfy the relation A₁ > A₂ > A₃ > ... Aₙ₋₁ > Aₙ.

In this manner, by attaching the intake plates to the front door 12, the front door 12 of a housing 11 can be manufactured by one specification, and the intake plates can be appropriately selected afterwards in accordance with a necessary passage resistance. Note that the intake plates 51a to 51e illustrated in FIG 15 indicate an example in which the opening density of each slit 21 are changed, but it should not be limited thereto. For example, as illustrated in FIG 1, the opening height of the slit 21 for each stage may also be changed. In a battery board 10 having the front door 12 illustrated in FIG 15, it is possible to obtain the same effect as the battery board 10 illustrated in FIG 1.

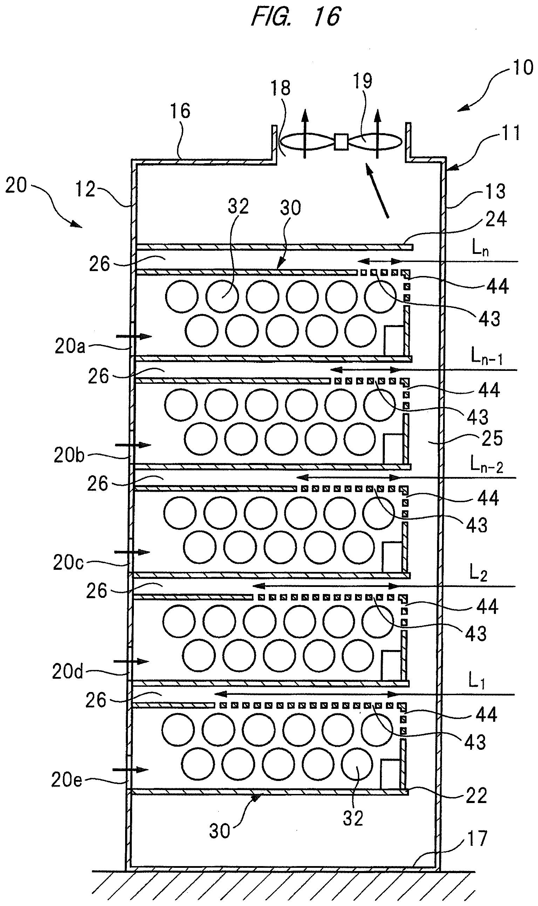

FIG 16 is a longitudinal cross-sectional view of a side surface of a battery board according to still another embodiment. In FIG 16, the same members as the above-mentioned members are denoted by the same reference characters, and an overlapped description will be omitted.

In a battery board 10 illustrated in FIG 16, an internal structure of a housing 11 is substantially equivalent to that illustrated in FIGs. 1 to 3. A shape of each slit 21 forming each intake port 20 is different from the case illustrated in FIGs. 1 and 2. A height and a pitch of each slit 21 forming the intake ports 20a to 20e are equivalent to each other. Note that an embodiment of an upper-surface outlet 43 of a battery case 31 is different from the battery pack 30 illustrated in FIG 2.

Specifically, the height and the pitch of each intake port 20 in the housing 11 are uniform in each stage, and an opening area of each of the intake ports 20a to 20e of each stage is equivalent to each other. In contrast, an effective length L of a region in the battery pack 30 where the upper-surface outlet 43 is formed, that is, a length from a back surface of the battery case 31 to the region where the plurality of upper-surface outlets 43 are formed differs in each stage.

The effective length L of the lowermost stage in the battery pack 30 is formed to be the longest. As the stage becomes higher, the effective length L of the region in the battery pack 30 where the upper-surface outlets 43 are formed is formed to be gradually shorter, and the effective length L of the battery pack 30 of the uppermost stage is formed to be the shortest. In other words, the effective length is set to satisfy the relation L₁ > L₂ > L₃ > ... Lₙ₋₁ > Lₙ, where L₁ is the effective length of each upper-surface outlet 43 of the lowermost stage and Lₙ is an opening density of each upper-surface outlet 43 of the uppermost stage. In this manner, without changing the height or the pitch of each intake port 20, the effective opening area A of each intake port 20 of each stage can be adjusted to satisfy the relation A₁ > A₂ > A₃ > ... Aₙ₋₁ > Aₙ by changing only the effective length L of the region in the battery pack 30 where the upper-surface outlets 43 are formed As a result, the passage resistance of the battery pack in each stage is substantially equalized, which leads to equalization of a flow rate of intake air.

Note that, in the battery board 10 illustrated in FIG 16, although the flow rate of the intake air to be supplied to the battery pack 30 of each stage is equalized by changing the effective length L of the region in the battery pack 30 where the upper-surface outlets 43 are formed so as to make the effective length L of each stage different, the present invention should not be limited to this embodiment. For example, the opening density of each upper-surface outlet 43 of the battery case 31 in each battery pack 30 of each stage can be made different among each other depending on the stage.

In the battery board 10 illustrated in FIG 16, it is possible to obtain an effect similar to the above-mentioned battery board illustrated in FIG 1.

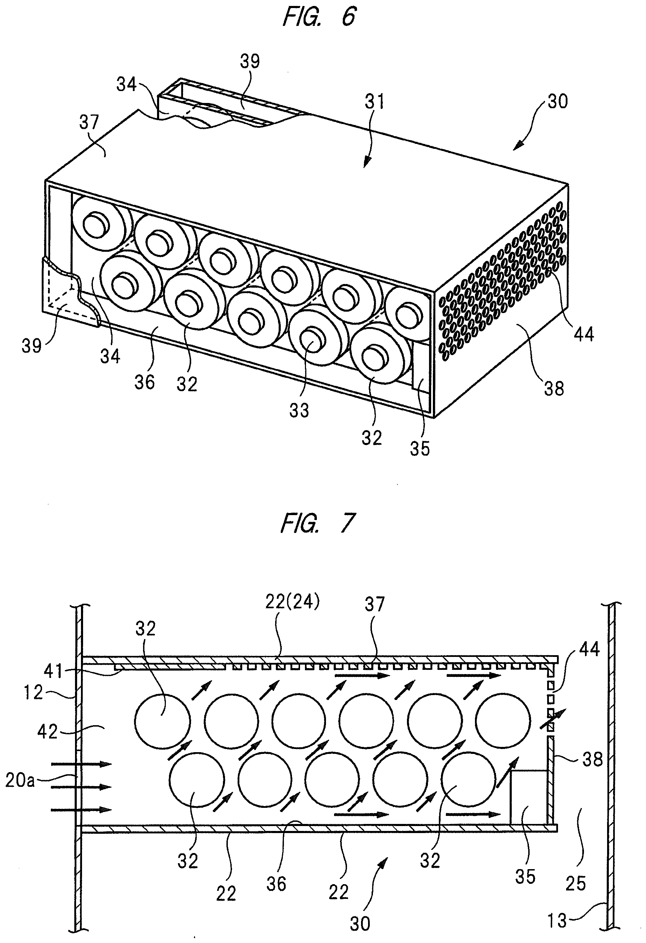

FIG 6 is a perspective view illustrating a modification example of the battery pack, and FIG 7 is a cross-sectional view illustrating a flow of cooling air inside the battery pack illustrated in FIG 6. In FIGs. 6 and 7, the same members as the members illustrated in FIGs. 1 to 5 are denoted by the same reference characters, and an overlapped description will be omitted.

A battery pack 30 illustrated in FIGs. 6 and 7 is substantially equivalent to the battery pack 30 illustrated in FIGs. 4 and 5. However, an embodiment of an upper surface or a top plate 37 of a battery case 31 is different.

As illustrated in FIG 6, the top plate 37 of the battery case 31 is not provided with an upper-surface outlet, and the upper-surface outlet is closed. In such a case, it is possible to enhance strength of the case comparing to the battery case 31 in FIG 4 in which the upper-surface outlets 43 are provided. In a case where uniformity of a temperature of each battery cell 32 inside the battery pack 30 is secured, this embodiment is sufficiently applicable to a practical use.

As illustrated in FIG 7, when the top plate 37 of the battery case 31 and a shielding plate 24 (or a shelf 22) are closely in contact so as to narrow a mounting pitch, a large number of battery packs can be mounted inside a battery board, which leads to enhancement of a capacity density of the battery board. Also in the battery pack 30 illustrated in FIGs. 6 and 7, it is possible to obtain an effect similar to the above-mentioned battery pack.

The present invention includes various modifications and is not limited to the embodiments. For example, the embodiments are described in detail to simplify the description of the present invention. Thus, it is not always necessary to provide all the described configurations. For example, the configurations of one of the embodiments may be partially replaced with those of the other embodiment or the configurations of one of the embodiments may further include the configurations of the other embodiment. Alternatively, the configurations of the embodiments may partially allow the addition of other configurations, deletion, and replacement.

### INDUSTRIAL APPLICABILITY

This battery board is applicable to an electric power storage system for storing renewable energy such as wind power generation and photovoltaic power generation.

## Claims

1. A battery board, comprising:
a housing including a ceiling wall provided with an exhaust port on a back surface side of the housing, right and left side walls, a back wall, and a front door;
a plurality of stages of shelves disposed to be spaced from each other in a vertical direction in the housing and forming a gap between the back wall;
a battery pack placed on each of the shelves and including a plurality of battery cells and a battery case containing the battery cells and provided with an inlet at a front portion of the battery case, the inlet allowing air cooling the battery cells to flow;
a common exhaust passage formed continuously in the vertical direction between a back surface portion of the battery pack and the back wall and communicating with the exhaust port;
an exhaust passage formed between an upper surface of the battery pack and the shelf right above the battery pack and communicating with the common exhaust passage;
a plurality of stages of intake ports vertically provided in the front door to be opposed to the front portion of the battery case and taking outside air into the housing; and
an exhaust fan provided in the housing and exhausting the air inside the housing from the exhaust port to an outside,
wherein an effective opening area of the intake port of a lowermost stage is formed to be a largest, and the effective opening area of the intake port of each stage is gradually decreased from the intake port of the lowermost stage of an uppermost stage.

2. The battery board according to claim 1,
wherein an outlet is provided in a back surface of the battery case, and the air flowing in from the inlet is allowed to flow out through the outlet to the common exhaust passage.

3. The battery board according to claim 1,
wherein an upper-surface outlet is provided in an upper surface of the battery case, a back-surface outlet is provided in the back surface of the battery case, and the air flowing in from the inlet is allowed to flow out through the upper-surface outlet and the back-surface outlet to the common exhaust passage.

4. The battery board according to claim 3,
wherein an effective opening area of the upper-surface outlet of the lowermost stage of the battery pack is formed to be a largest, and the effective opening area of the upper-surface outlet of the battery pack of each stage is gradually decreased from the upper-surface outlet of the battery pack of the lowermost stage to the uppermost stage.

5. A battery board, comprising:
a housing including a ceiling wall provided with an exhaust port on a back surface side of the housing, right and left side walls, a back wall, and a front door;
a plurality of stages of shelves disposed to be spaced from each other in a vertical direction in the housing and forming a gap between the back wall;
a battery pack placed on each of the shelves and including a plurality of battery cells and a battery case containing the battery cells and provided with an inlet at a front portion of the battery case, the inlet allowing air cooling the battery cells to flow;
a common exhaust passage formed continuously in the vertical direction between a back surface portion of the battery pack and the back wall and communicating with the exhaust port;
an exhaust passage formed between an upper surface of the battery pack and the shelf right above the battery pack and communicating with the common exhaust passage;
a plurality of stages of intake ports vertically provided in the front door to be opposed to the front portion of the battery case and taking outside air into the housing; and
an exhaust fan provided in the housing and exhausting the air inside the housing from the exhaust port to an outside,
wherein an upper-surface outlet is provided in an upper surface of the battery case and a back-surface outlet is provided in a back surface of the battery case, and
an effective opening area of the upper-surface outlet of a lowermost stage of the battery pack is formed to be a largest, and the effective opening area of the upper-surface outlet of the battery pack of each stage is gradually decreased from the upper-surface outlet of the battery pack of the lowermost stage to an uppermost stage.

6. The battery board according to any one of claims 1 to 5,
wherein a lower side portion of the front portion of the battery pack is aligned with a lower end of each of the intake ports.

7. The battery board according to any one of claims 1 to 6,
wherein each of the intake ports is formed by a plurality of rectangular slits extending in the vertical direction and provided to be spaced from each other in the front door in a horizontal direction.

8. The battery board according to claim 7,
wherein the effective opening area of each of the intake ports is adjusted by changing at least one of a height in the vertical direction, a width, and an interval in the horizontal direction of each of the slits.

9. The battery board according to any one of claims 1 to 5,
wherein the battery board comprises an intake plate attached to an opening provided in the front door to be opposed to a front of the battery case, and each of the intake ports is formed by a plurality of rectangular slits extending in the vertical direction and provided in the intake plate to be spaced from each other in a horizontal direction, and the effective opening area of each of the intake ports is changed by the intake plate by changing at least one of a height in the vertical direction, a width, and an interval in the horizontal direction of each of the slits.
